# EUROPEAN PATENT SPECIFICATION

(11) **EP 1 766 713 B1**
(45) Date of publication and mention of the grant of the patent: **21.04.2010**
(21) Application number: 05755299.4
(22) Date of filing: 29.06.2005
(51) Int. Cl.: H01M 8/10, C25B 9/10

(54) **LAMINATION PROCESS FOR MANUFACTURE OF INTEGRATED MEMBRANE-ELECTRODE-ASSEMBLIES**
LAMINIERUNGSPROZESS ZUR HERSTELLUNG VON INTEGRIERTEN MEMBRAN-ELEKTRODEN-BAUGRUPPEN
PROCESSUS DE LAMINAGE POUR FABRIQUER DES ENSEMBLES ELECTRODES A MEMBRANE INTEGREE

(30) Priority: 01.07.2004 EP 04015457
(43) Date of publication of application: 28.03.2007
(73) Proprietor: Umicore AG & Co. KG, 63457 Hanau-Wolfgang (DE)
(72) Inventor: ROHLAND, Lutz, 63457 Hanau (DE); HOHENTHANNER, Claus-Rupert, 63457 Hanau (DE)
(74) Representative: Starz, Karl Anton
(86) International application number: PCT/EP2005/006974
(87) International publication number: WO 2006/002878

(56) References cited:
- EP-A- 1 369 948
- US-B1- 6 197 147
- US-B1- 6 756 147

## Description

The present invention refers to the manufacture of electrochemical devices such as fuel cells, batteries, electrolyzer cells or electrochemical sensors. In more detail, the present invention provides a process for manufacturing of integrated membrane-electrode-assemblies (MEAs) for fuel cells. Such integrated MEAs comprise of a polymer electrolyte membrane, at least one electrically conductive, porous gas diffusion layer ("GDL"), at least one catalyst layer deposited on the membrane and/or the GDL, and additionally at least one protective film material, serving as a sealant, reinforcement or protective film layer.

Fuel cells convert fuel and oxidant directly into electric power and heat in an electrochemical reaction without the limitations of the CARNOT process. Nowadays, a significant number of fuel cell applications use a solid polymer electrolyte membrane (PEM) disposed between the two catalytic active compartments, this type of cell is usually referred to as PEM Fuel Cell (PEMFC).

The polymer electrolyte membrane fuel cell (PEMFC) and the direct methanol fuel cell (DMFC, a variation of the PEMFC, powered directly by methanol instead of hydrogen) are suitable for use as energy converting devices due to their compact design, their power density and high efficiency. The technology of fuel cells is broadly described in the literature, see for example K. Kordesch and G. Simader, "Fuel Cells and its Applications", VCH Verlag Chemie, Weinheim (Germany) 1996.

In the following section, the technical terms and abbreviations used in the present patent application are described in greater detail:

A membrane-electrode-assembly ("MEA") is the central component in a polymer electrolyte membrane fuel cell (PEMFC) or DMFC stack and basically consists of five layers: The anode GDL, the anode catalyst layer, the ionomer membrane, the cathode catalyst layer and the cathode GDL. A MEA can be manufactured by combining a catalyst-coated membrane (CCM) with two GDLs (on the anode and the cathode side) or, alternatively, by combining an ionomer membrane with two catalyst-coated backings (CCBs) at the anode and the cathode side. One of the catalyst layers takes the form of an anode for the oxidation of hydrogen and the second layer takes the form of a cathode for the reduction of oxygen. Due to its fragile nature, the ionomer membrane and the MEA is frequently reinforced or protected by a protective film material for better handling, gasketing and/or sealing.

Gas diffusion layers ("GDLs"), sometimes referred to as gas diffusion substrates or "backings", are placed onto the anode and cathode layers of the CCM in order to bring the reaction media (hydrogen or methanol and air) to the catalytically active layers and, at the same time, to establish an electrical contact. GDLs usually consist of carbon-based substrates, such as carbon fibre paper or woven carbon fabric, which are highly porous and allow the reaction media a good access to the electrodes. In most cases, they are hydrophobic in order to remove the product water from the fuel cell. GDLs can be coated with a microlayer to modify their water management properties. They can be tailored specifically into anode-type GDLs or cathode-type GDLs, depending on which side they are built into a MEA. Furthermore, they can be coated with a catalyst layer and subsequently laminated to the ionomer membrane. These catalyst-coated GDLs are frequently referred to as "catalyst-coated backings" (abbreviated "CCBs") or gas diffusion electrodes ("GDEs").

The anode and cathode catalyst layers comprise electrocatalysts, which catalyse the respective reaction (oxidation of hydrogen at the anode and reduction of oxygen at the cathode). The metals of the platinum group of the Periodic Table are preferably used as catalytically active components. For the most part, supported catalysts are used, in which the catalytically active platinum group metals are fixed in form of nano-sized particles to the surface of a conductive support material. The average particle size of the platinum group metal is in the range of about 1 to 10 nm. Carbon blacks with particle sizes of 10 to 200 nm and good electrical conductivity have proven to be suitable as support materials.

The polymer electrolyte membrane comprises proton-conducting polymer materials. These materials are also referred to below as ionomer membranes. A tetrafluoroethylene-fluorovinyl-ether copolymer with sulfonic acid groups is preferably used. This material is marketed for example by E.I. DuPont under the trade name Nafion^{®}. However, other, especially fluorine-free ionomer materials such as sulfonated polyether ketones or aryl ketones or acid-doped polybenzimidazoles may also be used. Suitable ionomer materials are described by O. Savadogo in "Journal of New Materials for Electrochemical Systems" I, 47-66 (1998). For application in fuel cells, these membranes generally have a thickness between 10 and 200 µm.

For future widespread commercialization of the PEMFC and DMFC technology, industrial-scale, economical production processes for catalyst-coated membranes (CCMs) and membrane-electrode-assemblies (MEAs) are required. Such MEAs are needed for manufacturing of commercial quantities of stacks for mobile, stationary and portable applications. The manufacturing processes must be economical, continuous, fast, environmentally safe and with high throughput. These requirements also apply to the coating and lamination processes currently used in MEA production.

Generally, various technologies for laminating of materials are applicable. The standard processes such as reciprocal (hydraulic) press bonding and roller bonding are well known to the person skilled in the art.

WO 02/091511 describes the use of a double belt press for the manufacture of MEAs for PEM fuel cells. Either isobaric or isochoric belt presses are employed for the lamination of MEA materials. Due to the elongated processing zone, these presses allow higher production speeds and continuous material conveyance. Two elongated, streched steel belts are used for pressure application. Due to the rather rigid steel belts, these machines are unable to respond to thickness variations or to different step heights in the processed materials. Thus, GDLs and/or CCBs and frames of protective film materials cannot be laminated together in one single pass. Moreover, the equipment is very expensive and bulky. The stretching of a steel belt requires a rigid machine design and due to the bending stiffness of the steel belt, large drums have to be employed to drive the belt.

WO 97/23919 discloses a continuous production process for membrane-electrode-composits. The lamination of the components can be performed by a pair of rollers or by a press at temperatures up to 300°C and a high pressure in the range of 10⁷ to 10¹² Pa.

WO 01/61774 teaches the manufacture of a reinforced ion exchange membrane by use of a roll-to-roll process. A double belt press or a belt calander is employed for pressing or rolling the materials.

EP 1 369 948 A1 discloses a process for the manufacture of membrane-electrode-assemblies using a catalyst-coated membrane and adhesive components.

In summary, the draw-backs of the state of the art are:
a) In the materials employed, an uneven height distribution is found, namely in the gas diffusion layers (GDLs). Lamination processes with rigid press platens or steel rollers lead to a non-uniform distribution of the resulting laminating forces. To ensure proper lamination in each point of the surface, rather high pressure has to be employed. Due to this high pressure, a high compression of the GDLs occurs, which in turn may result in a destruction of the GDL structure. Generally, for reciprocal (hydraulic) press bonding and for bonding with steel rollers as described in the state of the art, it is known that the compression of the GDLs is usually more than 10 % of their original thickness.
b) Integrated MEA materials (e.g. 7-layer MEAs as described hereinafter) cannot be laminated. Different substrate heights due to additional rims of protective film material cause steps in the substrate to be laminated. In the region of the steps, non-uniform pressure is applied and proper lamination is not possible.
c) Insufficient control of the temperature and pressure during lamination. Due to height differences in the material and a process design which is unable to react to that properly, the pressure and the temperature cannot be predicted and controlled properly. If the temperature and/or pressure for lamination is too high, thickness deviations and even shortings in the MEA may occur.
d) High cost of the equipment. This refers particularly to double-belt presses as disclosed in WO 02/091511.

It was therefore the object of the present invention to provide an improved process for manufacture of integrated membrane-electrode-assemblies (MEAs), which avoids the disadvantages of the state of the art. In particular, it was an object of the invention to provide an improved lamination process incorporating the advantages of low pressure and tight control of the temperature/pressure profile for substrate heating. Additionally, the process should allow the processing of integrated MEAs and similar products with temperature- and/or pressure-sensitive components. The process and equipment therefor should be economical viable (i.e. of reasonable costs).

This object was achieved by the manufacturing process of claim 1 of the present invention. It provides a process for manufacture of an integrated membrane-electrode-assembly (MEA) comprising an ionomer membrane, at least one gas diffusion layer (GDL), at least one catalyst layer deposited on the GDL and/or the ionomer membrane, and at least one protective film material, wherein the ionomer membrane, the at least one gas diffusion layer (GDL), the at least one catalyst layer and the at least one protective film material are bonded together in a lamination process comprising the steps of :
(a) heating the components to a temperature in the range of 20 to 250 °C
(b) laminating the components by applying a laminating force with a pair of rolls.

Preferred embodiments of the process are disclosed in subsequent, dependent claims. Optionally, the claimed process embraces an additional cooling step (c) for cooling the laminates after heat and pressure application. The claimed process is used for lamination of integrated MEAs, which contain temperature- and/or pressure-sensitive components such as protective film materials.

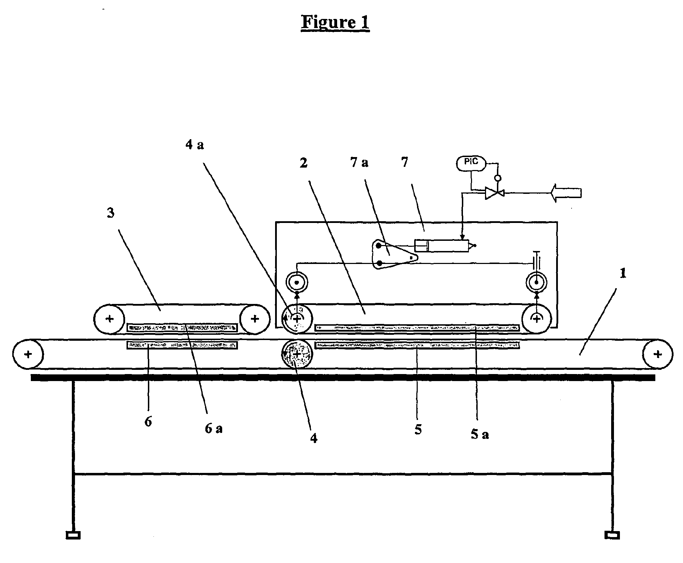

A suitable device for lamination of the integrated membrane-electrode-assemblies (MEAs) according to the process of claim 1 is depicted in **Figure 1****.**

A continuous transporting belt (1), comprising the lower heating platen (5) in the heating zone and optionally the lower cooling platen (6) in the cooling zone (6, 6a), is mounted on a bench-type rig. The laminator comprises a second belt (2) containing the upper heating platen (5a) in the heating zone (5, 5a) and optionally a third belt (3) containing the upper cooling platen (6a) in the cooling zone (6, 6a). A pair of rolls (4, 4a) is applying the pressure for lamination. The pressure to the upper roll (4a) is supplied by a pneumatic pressure unit (7, 7a). The heating platens (5, 5a) and cooling platens (6, 6a) can be supported by a self-adjusting construction. This is achieved by supporting the upper platens only in the center line by means of pendulum-type bearings. Generally, the device can be constructed inexpensive and simple and can be integrated in a continuous manufacturing line of integrated MEAs ("reel to reel" process). The process can also be operated in a discontinuos way by use of discrete material sheets or blanks.

In a preferred embodiment, the rolls (4, 4a) are not directly heated, since the thermal energy is supplied in the heating zone (5, 5a). In this preferred embodiment, at least one of the rolls (4, 4a) of the lamination device is coated with a soft, elastomeric material. When using rubber or silicone-coated rolls, MEAs containing steps and/or height deviations due to protective film frames can be properly processed. At any process speed, the rolls will easily response to such height variations, even when in the machine direction of the materials. At least one of the two rolls (4, 4a) should be pneumatically loaded (i.e. pressurized) with the suitable laminating force.

In a further preferred embodiment, a PTFE (Teflon®) belt is used for the transporting belt (1). Instead of PTFE, similar materials such as reinforced glass fiber belts or silicone-coated fiber glass belts may be used. There is no need for stretching the belts, and the driving drums (i.e. the coated rollers) can be small in diameter due to the low bending stiffness of the belts. Thus, the machine may be constructed only for a fraction of the cost needed for a double belt press.

The process provides sufficient dwell time in the heating zone (5, 5a) to generate an uniform temperature distribution. It is of great importance that the ionomer membrane has reached its glass transition point (T_{g}) when the GDL or CCB components are laminated to the ionomer membrane to form the MEA. Unfortunately, the membrane becomes ductile and fluid when heated to the T_{g} and when under pressure. If the lamination process is not properly controlled in temperature and pressure, thickness deviations and even shortings may occur in the laminated assembly.

The temperature in the heating zone is in range of 20 to 250 °C, preferably in the range of 100 to 200 °C. Typically, the heating zone (5, 5a) has longitudinal dimension of less than 1 m and the (optional) cooling zone has dimensions of less than 0,8 m. The temperature in the cooling zone is adjusted in the range of 10 to 50 °C. Typically, the belt speed in the heating zone is in the range of 1 to 500 m/h, preferably in the range of 50 to 200 m/h. Similar figures apply for the optional cooling zone.

The employed materials, especially the gas diffusion layers (GDLs) are relatively non-uniform in their thickness. In general, it has been found that working with rolls means averageing the product thickness over the bandwidth, whereas reciprocal (i.e. hydraulic) press bonding means averageing over a two-dimensional area, which results in an uneven force distribution in the lamination process.

Surprisingly, it was found that in the claimed process the gas diffusion layers (GDLs) suffer a compression of less than 10 %, typically as low as 5 % of their original thickness. For comparison, it is known from reciprocal press bonding or conventional roller bonding with steel rollers, that the compression of the GDLs is about more than twice as much (i.e. > 10 % of their original thickness).

At least one of the two rolls (4, 4a) of the laminator is pressurized with a suitable pneumatic pressure unit (7, 7a). The pressure to the upper roll (4a) is adjusted by a pressure indication controller (PIC). The air inlet pressure is used as a measure for the laminating force applied to the upper roll (4a). Generally, the air inlet pressure is in the range of 0,25 to 6 bar, preferably in the range of 1 to 3,5 bar. The laminating force applied to the upper roll (4a) can be calculated to be in the range of 50 to 1300 N, preferably in the range of 200 to 750 N.

The diameter of the rolls (4, 4a) is in the range of 50 to 100 mm, their length is in the range of 100 to 800 mm.

In summary, the claimed lamination process surpasses the prior state of the art. The assembly to be laminated is brought under pressure for the shortest possible time in the nip of the rollers, but still the separate heating zone provides for an even temperature distribution within the material. In contrast to the double belt press, pressure is only applied by a single pair of rolls, preferably rolls (4, 4a). No areal pressure is applied. The gas diffusion layers (GDLs) and/or catalyst-coated GDLs (CCBs) laminated to the ionomer membrane according to the claimed process retain their original structure. This is due to a very low compression of less than 10 % , preferably of less than 6 % of their original thickness. As a consequence, their performance regarding water management is much better compared to the products made by conventional lamination processes. Superior integrated MEA products are manufactured by the claimed process.

Suitable lamination devices are commercially available and can be purchased at Vaporetta Geraetebau (Koeln, Germany) or Adams International Technologies (Ball Ground, Georgia, USA), Glenro Inc. (Paterson, New York, USA) or Meyer Maschinenbau (Roetz, Germany).

The integrated MEA products may enclose 4-, 5-, 6-, 7-layer MEAs, multilayer MEAs, MEAs with additional gasketing layers, MEAs with integrated gasket frames and the like.

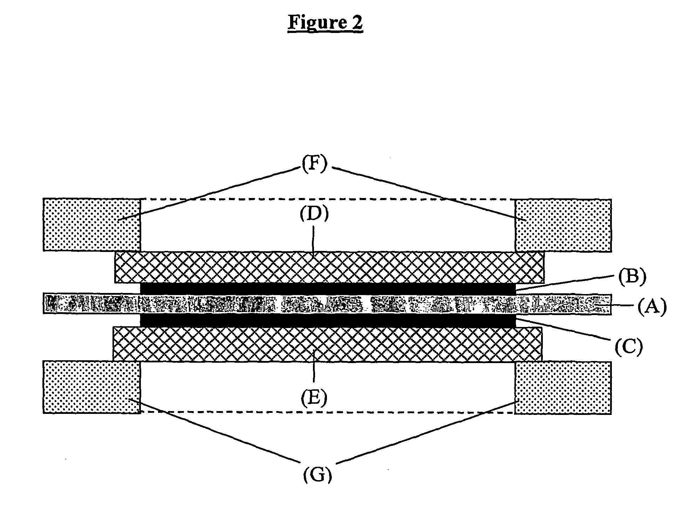

In **Figure 2****,** an example for an integrated MEA product is shown (in this case a 7-layer MEA). The individual components are depicted in a schematic drawing in the pre-assembled state. The 7-layer MEA comprises of an ionomer membrane (A), two catalyst layers (B, C), either deposited on the GDL or onto the membrane, two electrically conductive, porous gas diffusion layers (GDLs) (D, E), and two frames of protective film material (F, G). Variations of this basic assembly are possible in order to arrive at MEAs with lower or higher layer count or different layer sequences. In a very simple version, an integrated 4-layer MEA comprises of an ionomer membrane (A), at least one gas diffusion layer (D), at least one catalyst layer deposited on the GDL and/or the ionomer membrane (B) and at least one protective film material (F).

Various types of commercial available GDLs as well as other materials can be used for the manufacture of the integrated membrane-electrode-assembly (MEA). As base materials for GDLs (D, E), woven carbon cloth, non-woven carbon fiber layers or carbon fiber papers may be used. The GDLs may be hydrophobically treated or not. They may comprise of additional microlayers and catalyst layers, if necessary.

The protective film material (F, G) comprise of thermoplastic polymers selected from the group of polyethylenes, polypropylenes, polytetrafluorethylenes, PVDF, polyesters, polyamides, polyimides and polyurethanes, and/or elastomeric materials selected from the group of silicones, silicone elastomeres, EPDM, fluoro-elastomers, perfluoro-elastomers, chloropren-elastomes, fluorosilicone-elastomers, and/or duroplastic polymers selected from the group of epoxy resins, phenolic resins and cyano-acrylates.

For positioning the components prior to their assembly, various technologies known to those skilled in the art can be employed. The handling and positioning of the components can be made sheetwise or continuously or even in a mixture of both, automatically or in manual operation. In assembly of the integrated MEAs, a part of the GDL surface may overlap with the protective film materials. The area of the overlapping zone depends on the size of the MEA product and the operating conditions. Preferably, the overlapping area is in the range of 0,1 - 20 % of the total area of the GDL, most preferably it is in the range of 0,2 - 10 % of the total area of the GDL.

Generally, the lamination process of the present invention as well as the lamination device can be operated separate or it can be integrated into a continuous manufacturing line for integrated MEAs.

### EXAMPLES

The following examples describe the invention in more detail. These examples are presented to aid in an understanding of the present invention.

### Example 1:

A 7-layer MEA as depicted in **Figure 2** is manufactured. An ionomer membrane, (Nafion ® NR 117, DuPont) is coated with two catalyst layers to produce a CCM according to known processes (ref. to EP 1 037 295). The CCM has an active area of 50 cm² (7 x 7 cm) and a total area of 100 cm² (10 x 10 cm). In a second step, two porous gas diffusion layers (Sigracet 30 BC, dimensions 7,5 x 7,5 cm; SGL, Meitingen) are positioned on the top and on the back side of the CCM. Two frames of protective film material (Vestamelt®, Degussa, Duesseldorf), each with outer dimensions of 10 x 10 cm and inner dimensions of 7 x 7 cm and a thickness of 150 µm are prepared, the first frame is positioned on the top and the second frame on the bottom of this assembly. Parts of the GDL surface are overlapping with the protective film material. The area of the overlapping zone depends on the size of the product and the operating conditions. Preferably, the overlapping area is in the range of 0,1 - 20 % of the total area of the GDL, most preferably it is in the range of 0,2 - 10 % of the total area of the GDL. Then, the materials are passed through the lamination device as described in the present invention, applying the following operating conditions:

| | |
|---|---|
| Temperature: | 175 °C |
| Pressure (air inlet pressure): | 3,5 bar |
| Belt speed: | 150 m / h |
| Diameter of rolls (4, 4a): | 80 mm |
| Length of rolls (4, 4a): | 500 mm |
| Laminating force applied to roll (4a): | 750 N |

After a single pass, the integrated 7-layer MEA product is completed.

### Example 2:

An ionomer membrane (thickness 25 µm) is coated with two catalyst layers to form a CCM by processes known to those skilled in the art. A frame of protective film material made of Platilon® (Epurex, Germany) with a thickness of 50 µm is positioned on the top side the CCM, and then the GDL (Sigracet 21 BC; SGL, Meitingen) is positioned on the frame in such a way, that parts of the GDL overlap with the protective film material. The area of the overlapping zone depends on the size of the product and the operating conditions. Preferably, the overlapping area is in the range of 0,1 - 20 % of the size of the GDL, most preferably it is in the range of 0,2 - 15 % of the size of the GDL. A second GDL is then positioned on the back side of the membrane onto a second frame of protective film material in the same way. Parts of the GDL overlap with the protective film material. Then, the stacked materials are passed through the lamination device. In this example, the laminating conditions are:

| | |
|---|---|
| Temperature: | 135 °C |
| Pressure (air inlet pressure): | 2,2 bar |
| Belt speed: | 100 m / h |
| Laminating force applied to roll (4a): | 480 N |

After a single pass, the final integrated 7-layer MEA is completed.
The compression of the gas diffusion layers (GDLs) during lamination is about 2,7 % of their original thickness.

### Example 3

An ionomer membrane, in this example Nafion® NR 112 (DuPont) is interposed between two electrodes (i.e. catalyst-coated backings, CCB's). The electrodes each consist of a GDL (Sigracet 30 BC; SGL, Meitingen), coated with an anode (respectively cathode) catalyst layer according to methods well known to those skilled in the art. Two frames of protective film material are prepared from a film of Vestamelt® (Degussa, Duesseldorf) having a thickness of 190 µm. The first frame is positioned on top of the membrane, and then the first CCB is positioned onto said frame in a manner that the frame exactly stretches out from the boundaries of the CCB. The second CCB is positioned on the back side of the ionomer membrane and a second protective film frame is added thereto. The overlapping areas between the protective film frames and the electrodes are formed during impregnation of the CCBs in the lamination process The area of the said impregnation zone depends on the frame thickness and the laminating conditions. Preferably, the said area is in the range of 0,1 - 20 % of the size of the GDL, most preferably it is in the range of 0,2 - 15 % of the size of the GDL. The materials are passed through the laminating device. In this example, the laminating conditions are:

| | |
|---|---|
| Temperature: | 175 °C |
| Air inlet pressure : | 3,5 bar |
| Belt speed: | 80 m / h |
| Laminating force applied to roll (4a): | 750 N |

After a single pass, the MEA product is completed and can be used for the manufacture of PEMFC or DMFC single cells and stacks. The compression of the catalyst-coated GDLs (CCBs) during lamination is about 3,2 % of their original thickness.

## Claims

1. Process for manufacture of an integrated membrane-electrode-assembly (MEA) comprising an ionomer membrane, at least one gas diffusion layer (GDL), at least one catalyst layer deposited on the GDL and/or the ionomer membrane, and at least one protective film material, wherein the ionomer membrane, the at least one gas diffusion layer (GDL), the at least one catalyst layer and the.at least one protective film material are bonded together in a lamination process comprising the steps of :
(a) heating the components to a temperature in the range of 20 to 250 °C
(b) laminating the components by applying a laminating force with a pair of rolls (4, 4a), wherein the air inlet pressure for pressurizing at least one of the rolls (4, 4a) is in the range of 1 to 3,5 bar.

2. The process according to claim 1, wherein the laminating force is in the range of 200 to 750 N.

3. The process according to claim 1, wherein the at least one gas diffusion layer undergoes a compression of less than 10 % of its original thickness during lamination.

4. The process according to claim 1, wherein the belt speed in the heating zone is in the range of 1 to 500 m/h, preferably in the range of 50 to 200 m/h.

5. The process according to claim 1, further comprising a cooling step (c) after the beating step (a) and the laminating step (b).

6. The process according to claim 1, wherein the rolls (4, 4a) are not directly heated.

7. The process according to claim 1, wherein at least one of the rolls (4, 4a) is coated with soft elastomeric material of the group comprising rubbers, natural rubbers, silicone rubbers, polyurethane elastomers and the like.

8. The process according to claim 1, wherein the ionomer membrane comprises fluorinated ionomer materials such as totrafluoroethylene-fluorovinyl-ether copolymers with sulfonic acid groups or fluorine-free ionmer materials such as sulfonated polyetherketones, polyarylketones or acid-doped polybenzimidazoles and the like.

9. The process according to claim 1, wherein the gas diffusion layer (GDL) comprises woven carbon cloth, non-woven carbon fiber layers or carbon fiber papers and is optionally hydrophobically treated and/or coated with a microlayer and/or coated with a catalyst layer.

10. The process according to claim 1, wherein the catalyst layer comprises precious metals from the platinum metals group of the Periodic Table, such as, e.g., platinum, ruthenium, gold, silver, palladium and/or mixtures or combinations thereof.

11. The process according to claim 1, wherein the protective film material comprises thermoplastic polymers selected from the group consisting of polyethylenes, polypropylenes, polytetrafluorethylenes, PVDF, polyesters, polyamides, polyimides and polyurethanes.

12. The process according to claim 1, wherein the protective film material comprises elastomeric materials selected from the group consisting of silicones, silicone elastomeres, EPDM, fluoro-elastomers, perfluoro-elastomers, chloropren-elastomers and fluorosilicone-elastomers.

13. The process according to claim 1, wherein the protective film material comprises duroplastic polymers selected from the group consisting of epoxy resins, phenolic resins and cyano-acrylates.

14. Use of the process according to claim 1 for manufacture of integrated MEAs for electrochemical devices such as polymer electrolyte membrane fuel cells (PEMFC), direct-methanol fuel cells (DMFC), batteries, electrolyzer cells or electrochemical sensors.

15. Continuous manufacturing process for integrated MEAs, comprising the lamination process according to claim 1.

## Patentansprüche

1. Prozess zur Herstellung einer integrierten Membran-Elektroden-Baugruppe (MEA - membrane-electrode-assembly), umfassend eine Ionomermembran, mindestens ein Gasverteilersubstrat (GDL - gas diffusion layer), mindestens eine auf dem GDL und/oder der Ionomermembran abgeschiedene Katalysatorschicht und mindestens ein Schutzfilmmaterial, wobei die Ionomermembran, das mindestens eine Gasverteilersubstrat (GDL), die mindestens eine Katalysatorschicht und das mindestens eine Schutzfilmmaterial in einem Laminierungsprozess miteinander verbunden werden, der die folgenden Schritte umfasst:
(a) Erhitzen der Komponenten auf eine Temperatur im Bereich von 20 bis 250°C
(b) Laminieren der Komponenten durch Ausüben einer Laminierkraft mit Walzenpaar (4, 4a), wobei der Lufteinlassdruck, um mindestens eine der Walzen (4, 4a) unter Druck zu setzen, im Bereich von 1 bis 3,5 bar liegt.

2. Prozess nach Anspruch 1, wobei die Laminierkraft im Bereich von 200 bis 750 N liegt.

3. Prozess nach Anspruch 1, wobei das mindestens eine Gasverteilersubstrat eine Komprimierung von weniger als 10% seiner ursprünglichen Dicke während der Laminierung erfährt.

4. Prozess nach Anspruch 1, wobei die Bandgeschwindigkeit in der Heizzone im Bereich von 1 bis 500 m/h, bevorzugt im Bereich von 50 bis 200 m/h, liegt.

5. Prozess nach Anspruch 1, weiterhin umfassend einen Kühlschritt (c) nach dem Heizschritt (a) und dem Laminierungsschritt (b).

6. Prozess nach Anspruch 1, wobei die Walzen (4, 4a) nicht direkt erhitzt werden.

7. Prozess nach Anspruch 1, wobei mindestens eine der Walzen (4, 4a) mit einem weichen elastomeren Material aus der Gruppe umfassend Kautschuke, Naturkautschuke, Silikonkautschuke, Polyurethan-Elastomere und dergleichen beschichtet ist.

8. Prozess nach Anspruch 1, wobei die Ionomermembran fluorierte Ionomermaterialien wie etwa Tetrafluorethylen-fluorvinyl-ether-copolymere mit Sulfonsäuregruppen oder fluorfreie Ionomermaterialien wie etwa sulfonierte Polyetherketone, Polyarylketone oder säuredotierte Polybenzimidazole und dergleichen umfasst.

9. Prozess nach Anspruch 1, wobei das Gasverteilersubstrat (GDL) Kohlefasergewebe, Kohlefaservliesschichten oder Kohlefaserpapiere umfasst und optional hydrophobiert und/oder mit einer Mikroschicht beschichtet und/oder mit einer Katalysatorschicht beschichtet ist.

10. Prozess nach Anspruch 1, wobei die Katalysatorschicht Edelmetalle aus der Gruppe der Platinmetalle des Periodensystems, wie etwa Platin, Ruthenium, Gold, Silber, Palladium und/oder Mischungen oder Kombinationen davon umfasst.

11. Prozess nach Anspruch 1, wobei das Schutzfilmmaterial thermoplastische Polymere, ausgewählt aus der Gruppe bestehend aus Polyethylenen, Polypropylenen, Polytetrafluorethylenen, PVDF, Polyestern, Polyamiden, Polyimiden und Polyurethanen, umfasst.

12. Prozess nach Anspruch 1, wobei das Schutzfilmmaterial elastomere Materialien, ausgewählt aus der Gruppe bestehend aus Silikonen, Silikonelastomeren, EPDM, Fluorelastomeren, Perfluorelastomeren, Chloroprenelastomeren und Fluorsilikonelastomeren, umfasst.

13. Prozess nach Anspruch 1, wobei das Schutzfilmmaterial duroplastische Polymere, ausgewählt aus der Gruppe bestehend aus Epoxidharzen, Phenolharzen und Cyanoacrylaten, umfasst.

14. Verwendung des Prozesses nach Anspruch 1 zur Herstellung von integrierten MEAs für elektrochemische Vorrichtungen wie etwa Polymer-Elektrolyt-Membran-Brennstoffzellen (PEMFC), Direkt-Methanol-Brennstoffzellen (DMFC), Batterien, Elektrolyseurzellen oder elektrochemische Sensoren.

15. Kontinuierlicher Herstellungsprozess für integrierte MEAs, umfassend den Laminierungsprozess nach Anspruch 1.

## Revendications

1. Procédé pour la fabrication d'un ensemble membrane-électrodes (EME) intégré comprenant une membrane ionomère, au moins une couche de diffusion gazeuse (CDG), au moins une couche de catalyseur déposée sur la CDG et/ou la membrane ionomère, et au moins un matériau de film protecteur, dans lequel la membrane ionomère, l'au moins une couche de diffusion gazeuse (CDG), l'au moins une couche de catalyseur et l'au moins un matériau de film protecteur sont assemblés dans un procédé de laminage comprenant les étapes de :
(a) chauffage des composants à une température se situant dans la gamme de 20 à 250°C,
(b) laminage des composants par application d'une force de laminage avec une paire de rouleaux (4, 4a), la pression d'admission d'air pour pressuriser l'un au moins des rouleaux (4, 4a) se situant dans la gamme de 1 à 3,5 bar.

2. Procédé selon la revendication 1, dans lequel la force de laminage se situe dans la gamme de 200 à 750 N.

3. Procédé selon la revendication 1, dans lequel l'au moins une couche de diffusion gazeuse subit une compression de moins de 10 % de son épaisseur initiale durant le laminage.

4. Procédé selon la revendication 1, dans lequel la vitesse de bande dans la zone de chauffage se situe dans la gamme de 1 à 500 m/h, de préférence dans la gamme de 50 à 200 m/h.

5. Procédé selon la revendication 1, comprenant en outre une étape de refroidissement (c) après l'étape de chauffage (a) et l'étape de laminage (b).

6. Procédé selon la revendication 1, dans lequel les rouleaux (4, 4a) ne sont pas chauffés directement.

7. Procédé selon la revendication 1, dans lequel l'un au moins des rouleaux (4, 4a) est recouvert d'un matériau élastomère mou du groupe comprenant les caoutchoucs, les caoutchoucs naturels, les caoutchoucs de silicone, les élastomères de polyuréthane, et leurs équivalents.

8. Procédé selon la revendication 1, dans lequel la membrane ionomère comprend des matériaux ionomères fluorés tels que les copolymères tétrafluoroéthylène-éther fluorovinylique avec des groupes acide sulfonique ou des matériaux ionomères sans fluor tels que les polyéthercétones sulfonées, les polyarylcétones ou les polybenzimidazoles dopées avec un acide, et leurs équivalents.

9. Procédé selon la revendication 1, dans lequel la couche de diffusion gazeuse (CDG) comprend du tissu de carbone, des couches de fibres de carbone non tissées ou des papiers de fibres de carbone, et est éventuellement rendue hydrophobe et/ou recouverte d'une microcouche et/ou recouverte d'une couche de catalyseur.

10. Procédé selon la revendication 1, dans lequel la couche de catalyseur comprend des métaux précieux du groupe du platine du tableau périodique, tels que, par exemple, le platine, le ruthénium, l'or, l'argent, le palladium et/ou des mélanges ou combinaisons de ceux-ci.

11. Procédé selon la revendication 1, dans lequel le matériau de film protecteur comprend des polymères thermoplastiques choisis dans le groupe constitué par les polyéthylènes, les polypropylènes, les polytétrafluoroéthylènes, le PVDF, les polyesters, les polyamides, les polyimides et les polyuréthanes.

12. Procédé selon la revendication 1, dans lequel le matériau de film protecteur comprend des matériaux élastomères choisis dans le groupe constitué par les silicones, les élastomères de silicone, l'EPDM, les élastomères fluorés, les élastomères perfluorés, les élastomères de chloroprène, et les élastomères de fluorosilicone.

13. Procédé selon la revendication 1, dans lequel le matériau de film protecteur comprend des polymères duroplastiques choisis dans le groupe constitué par les résines époxydes, les résines phénoliques et les cyanoacrylates.

14. Utilisation du procédé selon la revendication 1 pour la fabrication d'EME intégrés pour des dispositifs électrochimiques tels que des piles à combustible à membrane électrolytique polymère (PEMFC), des piles à combustible au méthanol direct (DMFC), des batteries, des cellules d'électrolyseur ou des capteurs électrochimiques.

15. Procédé de fabrication continue pour des EME intégrés, comprenant le procédé de laminage selon la revendication 1.
